# EUROPEAN PATENT APPLICATION

(11) **EP 1 005 229 A2**
(43) Date of publication of application: **31.05.2000**
(21) Application number: 99309268.3
(22) Date of filing: 22.11.1999
(51) Int. Cl.: H04N 7/24

(54) **Apparatus and method for modifying a compressed video signal**

(30) Priority: 23.11.1998 US 198052
(71) Applicant: Hewlett-Packard Company, Palo Alto, California 94304 (US)
(72) Inventor: Hogan, Joshua N., Los Altos, CA 94022 (US)
(74) Representative: Jehan, Robert

(57) **Abstract**

A compressed video stream (10) that exhibits temporal redundancy (e.g., an MPEG-compliant video stream) is decompressed into an uncompressed domain representation (14), and the uncompressed domain representation is modified without substantially changing spatial relationships in the representation (18). Such modifications might include adding watermarks to the uncompressed domain representation, removing watermarks from the uncompressed domain representation, altering watermarks in the uncompressed domain representation, and adjusting hue and intensity in the uncompressed domain representation. The modified representation is then recompressed using the same motion vectors that were used to produce the original video stream (20). Thus, the uncompressed domain representation is recompressed without recomputing new motion vectors₁ thereby avoiding computationally intensive processing.

## Description

The invention relates to data compression according to a motion-compensated prediction scheme that exploits temporal redundancy. The invention also relates to copy protection of a compressed data stream.

High capacity disc players such as DVD players can provide access to wide screen movies having.high quality video images and high fidelity sound. The high quality format of the DVD player brings theatre-like entertainment to the home.

A full-length movie may be stored on a single DVD. This is made possible because the DVD has a high storage capacity. A single DVD can presently store several gigabytes of data. This is also made possible because video sequences are compressed according to an MPEG-based compression scheme. Modern compression schemes such as MPEG can reduce data storage requirements by factors of 15 to 80 without a considerable loss in the quality of the reconstructed video sequences.

However, the advent of read/write DVD drives for computers has made it possible to copy the DVD releases onto blank DVDs, thereby providing the opportunity to make unauthorised copies of the DVD releases. In the absence of a copy protection scheme, quality of these unauthorised copies is comparable to the quality of the DVD releases sold in stores. Therefore, unauthorised copying and distribution of DVD releases pose a challenge to artists, producers and copyrights owners who want to protect their capital investments and intellectual property rights.

Different copy protection schemes are available to thwart unauthorised copying and distribution of the DVD releases. For example, resilient watermarks can be "imprinted" in a compressed video sequence. A DVD player can then use the watermark to determine whether a disc containing an unauthorised copy is being played. The watermark might indicate whether the disc is compatible with the video sequence stored thereon, if the watermark indicates that the video sequence should only exist on stamped disks, the DVD player detects an incompatible "written" disc and shuts down.

However, modifying the video sequence by adding the watermark can be problematic, especially if the video sequence has already been compressed into an MPEG-compliant video stream. Decompressing the MPEG-compliant video stream into spatial-pixel domain representations, modifying the pixel domain representations, and then re-compressing the modified pixel domain representations back into an MPEG-compliant video stream is computationally intensive.

There might also be a need to alter an existing watermark after the watermark has been added to the video sequence. There might even be a need to remove the existing watermark from the video sequence. Here too, modifying the video sequence is computationally intensive, especially if the video sequence has already been compressed into an MPEG-compliant video stream.

The present invention seeks to provide a way of modifying an MPEG-compliant video stream.

According to an aspect of the present invention there is provided apparatus as specified in claim 1.

In the preferred embodiment, a first data stream that was compressed according to a motion-compensated prediction scheme such as MPEG is decompressed into an uncompressed domain representation. The uncompressed domain representation is then modified without substantially changing spatial relationships in the representation. The modified representation is then recompressed into a second data stream. The motion vectors in the first data stream are used in the second data stream.

An embodiment of the present invention is described, by way of example only, with reference to the accompanying drawings, in which:
Figure 1a is an illustration of exemplary frames of an MPEG compliant video stream, the frames being shown in a display order;
Figure 1b is an illustration of exemplary frames of an MPEG-compliant video stream, the frames being shown in a coding order;
Figure 2 is a block diagram of a preferred embodiment of system;
Figure 3 is a flowchart of a method of recompressing a modified spatial pixel domain representation;
Figure 4 is a block diagram of an embodiment of computer for modifying an MPEG compliant video stream; and
Figure 5 is a flowchart of an alternative method of modifying a video stream.

As shown in the drawings for purposes of illustration, the preferred embodiment is described in connection with a system for modifying a video stream such as an MPEG-compliant video stream. The system allows the video stream to be modified in a manner that is less computationally intensive than simply decompressing the MPEG video stream into an uncompressed representation, modifying the video in the uncompressed representation, and then generating a completely new MPEG-compliant video stream including new motion vectors. Consequently, the system allows watermarks to be added to, or removed from, a video stream in a less computationally intensive manner.

In the paragraphs that follow, a description of the preferred embodiment of system will be provided. The system will be described mainly in connection with a spatial pixel domain. First, however, descriptions of a video sequence in the spatial domain and an MPEG-compliant video stream will be provided.

In the spatial-pixel domain, a video sequence may be described as a hierarchy of units. A video sequence is made up of a group of pictures ("GOPs"). Each GOP is made up of a number of contiguous pictures, and each picture is made up of a number of slices. Each slice includes a number of macroblocks, and each macroblock includes a block of pixels. Each MPEG macroblock typically contains one or more 8x8 blocks of pixels.

MPEG is a block motion-compensated prediction scheme that reduces both temporal and spatial redundancies inherent in the video sequence. MPEG coding is generally performed as follows. The pictures of a video sequence are coded as intraframes ("I frames"), forward prediction frames ("P frames") and bi-directional prediction frames ("B frames"). Each GOP typically refreshes the temporal prediction by coding the first picture in the GOP as an I frame. The first picture in the GOP is scanned in a left-to-right, top-to-bottom fashion. Every block (i.e., 8x8 block) is coded. No prediction is used in the I frame.

The remaining pictures in the GOP are typically coded with interframe (predictive) coding techniques. A simplified description is as follows. The blocks in each of the remaining pictures of the GOP are scanned in a left-to-right, top-to-bottom fashion. A block is compared to similar sized sections of adjacent pictures. If a good match for the block is found, only the difference between the block and the matching section and the vector pointing to the matching section (i.e., the motion vector) are processed. The difference between the block and the matching section is commonly referred to as a "difference block." Performing this motion analysis is computationally intensive.

Typically, one motion vector is specified for each forward-predicted or backward-predicted block, and two motion vectors are specified for each bidirectionally predicted block. Thus, each P frame may include motion vectors that are related to a previous frame, while each B frame may include forward and backward motion vectors that are related to adjacent frames.

In P frames, each block may be coded using forward predictive or intraframe coding techniques. In B frames, each block may be coded using forward predictive coding techniques, backward predictive coding techniques, bi-directional predictive coding techniques, or intraframe coding techniques.

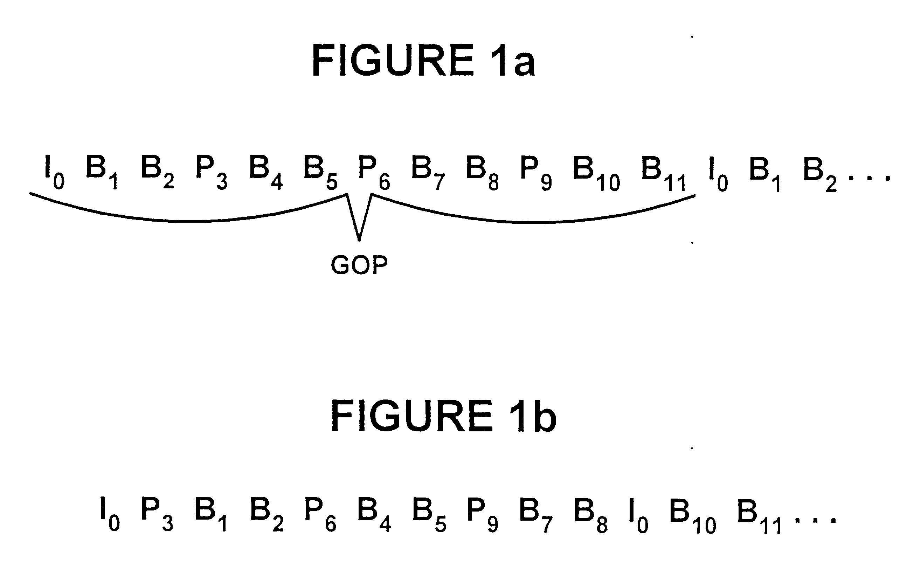

The MPEG syntax allows a GOP to contain a flexible number of pictures, but typical GOP sizes range between fifteen and thirty five frames. The I, P and B frames for each GOP are arranged in flexible orders. A typical IPB pattern in a display order is shown in Figure 1a, and a typical IPB pattern in a coding order is shown in Figure 1b. Data is placed in a video stream according to the coding order.

The original intraframe blocks and difference (i.e., residual interframe) blocks are then transformed from the spatial domain to the frequency domain. MPEG uses Discrete Cosine Transform ("DCT") coding to transform the intraframe and residual interframe blocks into 8x8 blocks of DCT coefficients.

The resulting DCT coefficients are quantized. Quantization usually results in a sparse representation of the data, i.e., usually most of the amplitudes of the quantized DCT coefficients are equal to zero. The quantized DCT coefficients are run-length encoded and then variable-length encoded using Huffmann coding. The motion vectors are also compressed using variable length coding techniques.

An MPEG-compliant video stream includes encoded DCT coefficients and encoded motion vectors. The DCT coefficients and motion vectors are grouped in GOPs. The video stream also includes header information for each of the GOPs.

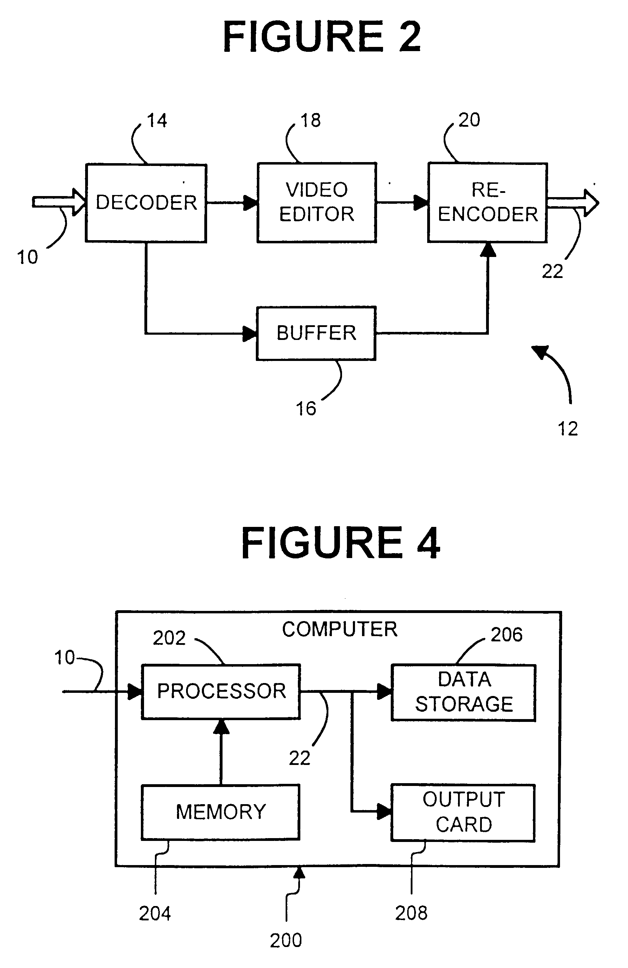

Figure 2 shows a system 12 for modifying the MPEG-compliant video stream 10. The MPEG-compliant video stream 10 is supplied to an MPEG decoder 14, which completely decompresses the video stream 10 into a pixel domain representation of the MPEG-encoded video sequence. The decoder 14 decompresses the video stream 10 in a conventional manner. The video stream 10 is decoded into quantized coefficients and motion vectors, the quantized coefficients are reconstructed, and the motion vectors and reconstructed DCT coefficients are used to reconstruct the pixel domain representation of the video sequence. In addition to performing the conventional decoding of the video stream 10, the decoder 14 stores the motion vectors in a buffer 16 for later use.

A conventional video editor 18 can then modify the pixel domain representation of the video sequence. However, the modification should be made without substantially changing spatial relationships in the pixel domain representation. Such modifications may include, without limitation, the following: adjusting the intensity and hue in the pixel domain representation; adding an artifact to the pixel domain representation, removing an existing artifact from the pixel domain representation, reducing noise, and altering an existing artifact in the pixel domain representation.

For example, an existing watermark could be removed from a video sequence. Or, a watermark could be added to discourage unauthorised copying of the video sequence. A watermark could be added to the pixel domain representation in a conventional manner. The watermark could be distributed in the representation as noise that is invisible to the viewer when the video sequence is being played back. However, the watermark can be detected by a copy protection-enabled system. The watermark contains information indicating whether a disc is compatible with the video sequences stored thereon. If a disc containing an unauthorised copy of the video sequence is inserted into the copy protection enabled player, and the watermark indicates that the video sequence should only exist on a stamped disc, the player will not play the disc. Instead, it might shut down.

A re-encoder 20 recompresses the modified pixel domain representation back into an MPEG-compliant video stream. The re-encoder 20 does not perform motion analysis on the modified pixel domain representation. Instead, the re-encoder 20 re-uses the motion vectors stored in the buffer 16. Using the buffered motion vectors, the re-encoder 20 generates an MPEG-compliant video stream 22 for the modified pixel representation (the "modified" video stream 22). Thus, recompression of the modified pixel domain representation is less computationally intensive then the compression that was used to produce the original video stream 10. Additionally, the recompression is about as computationally intensive as the decompression performed by the decoder 14. The modified video stream 22 may then be used to create a master DVD, or the modified video stream 22 may be stored on a disc.

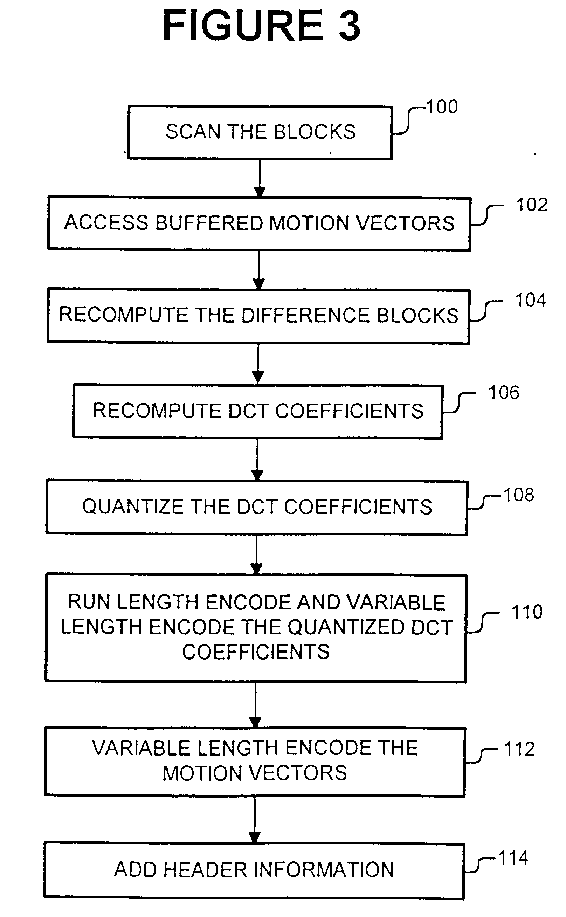

Reference is now made to Figure 3, which shows how a P or B frame is coded by the re-encoder 20. The re-encoder 20 scans blocks in the picture (block 100) and accesses the corresponding motion vectors stored in the buffer 16 (block 102). The re-encoder uses the motion vectors to find the matching sections in adjacent frames and to recompute the difference blocks (block 104). In this manner, the motion vectors are reused. Thus, the difference blocks are recomputed without having to recompute the motion vectors.

New DCT coefficients are recomputed for the macroblocks (block 106). The new DCT coefficients are quantized (block 108), and the quantized coefficients are run length encoded and variable length encoded (block 110). The buffered motion vectors are variable length encoded (block 112). Header information is then added (block 114) to produce the modified video stream 22.

If the same sequence of frames is kept, the headers and certain I, P and B frames may also be buffered in the buffer 16 and re-used during re-compression. Since the re-encoder 20 does not re-compute the motion vectors, it produces an MPEG-compliant stream in a less computationally intensive manner.

The system 12 may be realised by a combination of hardware and software components, such as a software-based video editor and a hardware-based encoder and re-encoder. In the alternative, the system may be implemented in software.

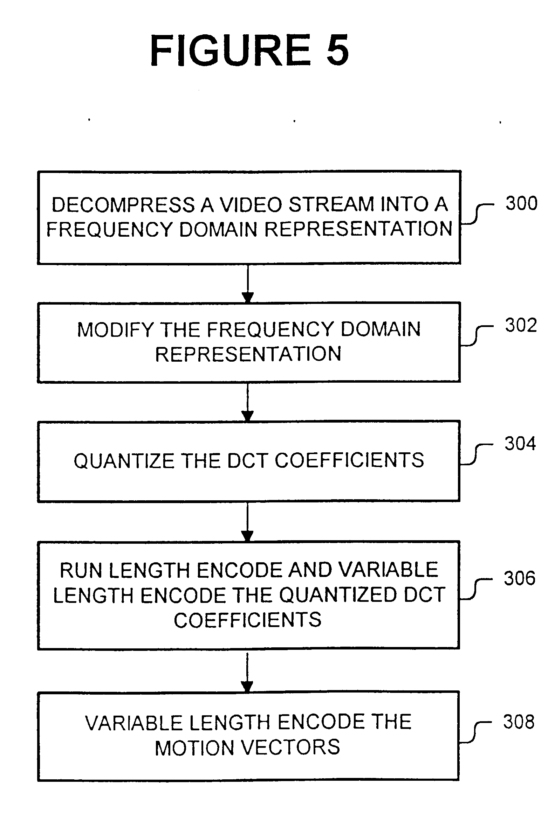

A software implementation is shown in Figure 4. A computer 200 includes a processor 202 and memory 204 that is encoded with a plurality of executable instructions. When executed, the instructions instruct the processor 202 to access the video stream 10 (e.g., from a peripheral device, a hard drive, the Internet), and then perform the decompression, video editing and re-compression described above. The memory 204 may also provide the buffering. The modified video stream 22 may then be sent to a data storage device 206 (e.g., a hard drive or DVD player) or an output card 208 (e.g. a modem or network card) for transmission to another computer.

Thus disclosed is a system that decompresses a video stream into a spatial domain representation, allows the spatial domain representation to be modified, and then re-uses motion vectors to recompress the modified spatial domain representation. Recompression of the modified pixel domain representation is less computationally intensive then the compression that produces the original video stream, and it is about as computationally intensive as the decompression that produces the pixel domain representation. Thus, the system allows a video stream to be modified in a manner that is more computationally efficient than simply decompressing a video stream, making modifications in the spatial pixel domain, and then generating a completely new video stream including new motion vectors. Consequently, watermarks can be added to an MPEG-compliant video stream, removed from the video stream, or altered in a less computationally intensive manner. Similarly, the hue and intensity of the video stream can be adjusted in a less computationally intensive manner.

When making a modification such as adjusting hue or introducing a small amount of spatial change, the buffered motion vectors might no longer be ideal. Consequently, the difference blocks might not code quite as well. However, the processing efficiency might justify the slight loss in quality.

The system could be applied to various MPEG coding standards such as MPEG-1 and MPEG-2, as well as other coding standards that rely on motion-compensation (e.g., motion JPEG, H.261, H.263). However, the method is not limited to such coding standards. The example of the MPEG-compliant video stream 10 was provided merely to facilitate an understanding of the described embodiment.

The method could be used in conjunction with any compression scheme that uses motion vectors or equivalents thereof.

The method is not limited to DVD players. The example of the DVD player was also provided to facilitate an understanding of the preferred embodiment.

Moreover, the invention is not limited to the specific embodiments described and illustrated above. For example, the re-encoder could generate the motion vectors independently of the decoder. Such a re-encoder would parse the video stream to regenerate the motion vectors. This would eliminate the buffer 16 and allow an off-the-shelf decoder to be used.

The method is not limited to a spatial pixel domain representation. For instance, the video sequence may be modified in a frequency domain. Referring to Figure 5, the video stream may be decompressed into a frequency domain representation by reversing the variable length encoding, the run length encoding, etc (block 300). The frequency domain representation may then be modified by directly modifying the reconstructed DCT coefficients (block 302). The modified frequency representation may then be recompressed into a modified stream by quantizing the DCT coefficients (block 304), and run length encoding and variable length encoding the quantized coefficients (block 306). The motion vectors are not modified; they are simply variable length coded (block 308). Thus, the motion vectors in the original video stream are used in the modified stream.

Thus, the steps involved in performing the decompression and recompression may or may not include taking DCT and inverse DCI transforms. Instead, the decompression and compression steps will depend upon the type of domain that is edited.

The disclosures in United States patent application no. 09/198,052, from which this application claims priority, and in the abstract accompanying this application are incorporated herein by reference.

## Claims

1. Apparatus (12) for allowing a first motion vector-compliant data stream (10) to be modified, the apparatus comprising:
a decoder (14) responsive to the first stream, for providing an uncompressed domain representation, and a plurality of motion vectors during decompression of the first data stream; and
a re-encoder (20) responsive to the motion vectors and a modified uncompressed domain representation, for providing a second motion vector-compliant data stream (22), the re-encoder using the plurality of motion vectors in the second stream.

2. The apparatus of claim 1, comprising a video editor (20) for modifying the uncompressed representation, the video editor being operable to provide the modified representation to the re-encoder.

3. The apparatus of claim 2, wherein the decoder, video editor and re-encoder are realised by a computer (200) including a processor (202) and memory (204), the memory being encoded with a plurality of instructions that, when executed, instruct the processor to decompress the stream into the uncompressed domain representation, allow the uncompressed domain representation to be modified, and re-compress the modified representation into the modified data stream.

4. The apparatus of claim 1, wherein the decoder is operable to use the plurality of motion vectors to provide an uncompressed spatial domain representation, and wherein the re-encoder is operable to use the plurality of motion vectors to compress a modified spatial domain representation.

5. The apparatus of claim 1, wherein the decoder is operable to provide an uncompressed frequency domain representation and wherein the re-encoder is operable to compress a modified frequency domain representation.

6. The apparatus of claim 1, comprising a buffer (16) for buffering the motion vectors generated during decompression of the first data stream, the re-encoder being operable to use the buffered motion vectors for the generation of the second stream.

7. The apparatus of claim 1, wherein the decoder is operable to perform decoding according to an MPEG standard, wherein the re-encoder is operable to perform encoding according to an MPEG standard, and wherein the first and second data streams are MPEG-compliant video streams.
